# EUROPEAN PATENT SPECIFICATION

(11) **EP 1 122 127 B1**
(45) Date of publication and mention of the grant of the patent: **02.05.2007**
(21) Application number: 01102266.2
(22) Date of filing: 31.01.2001
(51) Int. Cl.: B60Q 1/076

(54) **Optical axis adjusting apparatus in head light for automobile**
Vorrichtung zum Einstellen der optischen Achse eines Kraftfahrzeugscheinwerfers
Dispositif de réglage de l'axe optique d'un phare de véhicule

(30) Priority: 02.02.2000 JP 2000030255
(43) Date of publication of application: 08.08.2001
(73) Proprietor: ICHIKOH INDUSTRIES LIMITED, Shinagawa-ku, Tokyo 141-8627 (JP)
(72) Inventor: Yoneyama, Hirokazu c/o ICHIKOH INDUSTRIES, LTD.,, Isehara-shi, Kanagawa-ken 259-1192 (JP); Fukushima, Shouichi c/o ICHIKOH INDUSTRIES, LTD.,, Isehara-shi, Kanagawa-ken 259-1192 (JP)
(74) Representative: Grünecker, Kinkeldey, Stockmair & Schwanhäusser Anwaltssozietät

(56) References cited:
- FR-A- 2 432 405
- FR-A- 2 779 804
- US-A- 3 953 726

## Description

### BACKGROUND OF THE INVENTION

### FIELD OF THE INVENTION

The present invention relates to an optical axis adjusting apparatus in a head light for an automobile, for example, a head lamp, a fog lamp or the like in an automobile, and more particularly to an optical axis adjusting apparatus in a head light for an automobile in which a heat radiating performance of a motor can be improved, an assembling property can be improved and a compact size can be achieved.

### DESCRIPTION OF THE RELATED ART

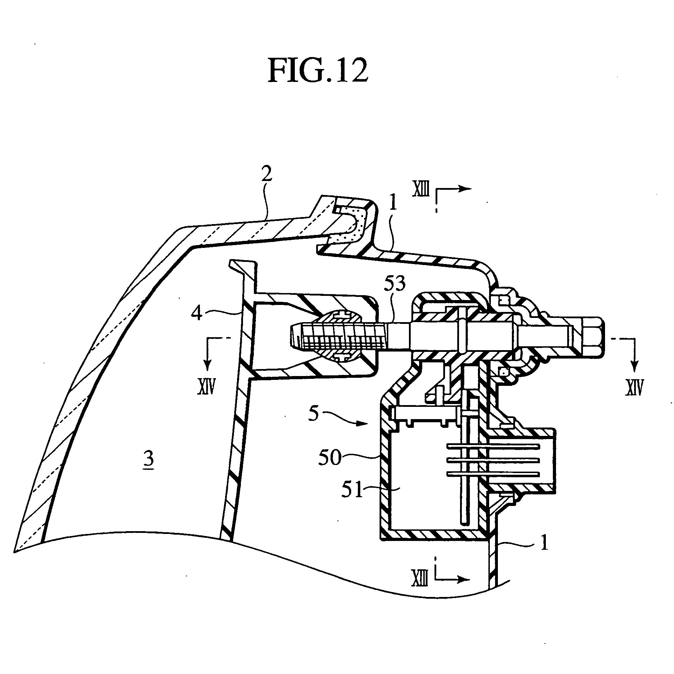

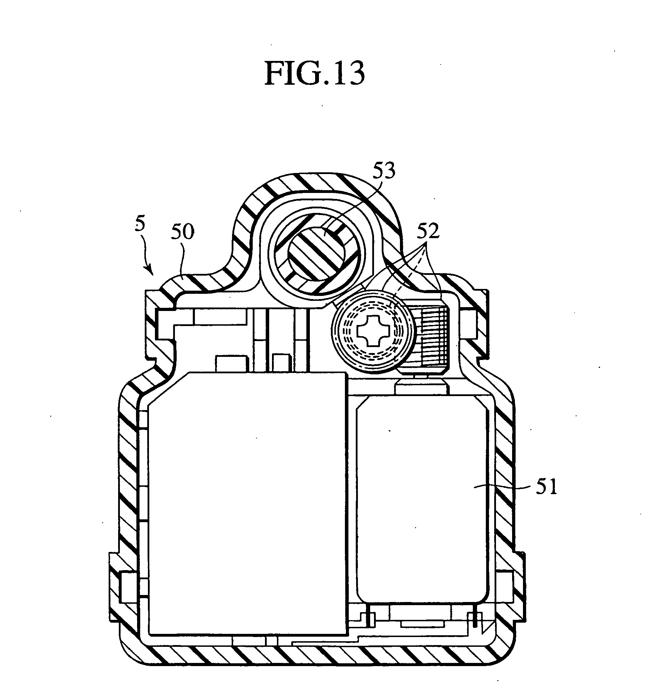

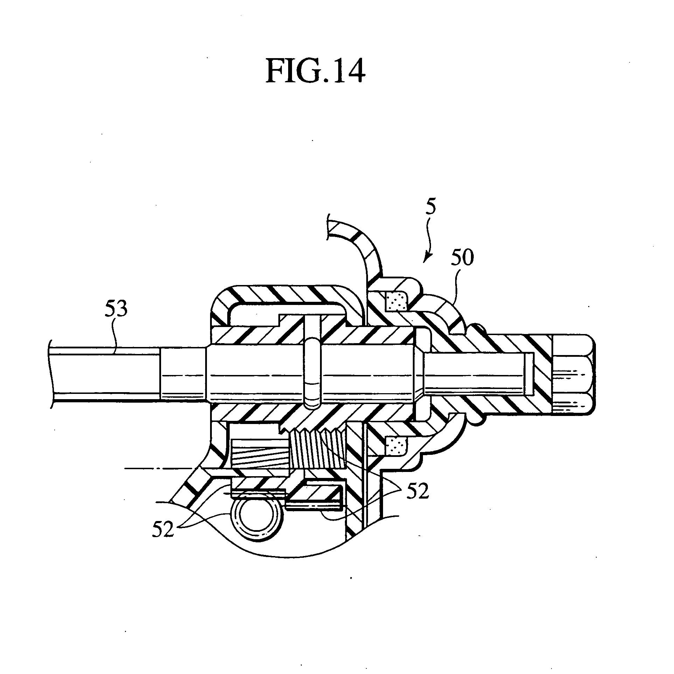

As an optical axis adjusting apparatus in this kind of head light for the automobile, for example, there is a structure described in Japanese Patent Application Laid-Open No. 8-164789. A description will be given below of an optical axis adjusting apparatus in a head light for an automobile with reference to Figs. 12 to 14.

In the drawings, reference symbol L denotes a head light for an automobile. The head light L for the automobile is structured such that a lamp chamber 3 is defined by a lamp housing 1 and a lens 2. A light source bulb (not shown) is arranged within the lamp chamber 2, and a reflector 4 reflecting a light beam output from the light source bulb to a side of the lens 2 is arranged so as to freely tilt. The structure is made such that an optical axis adjusting apparatus 5 is arranged between the lamp housing 1 and the reflector 4. Then, the reflector 4 is tilted in accordance with an operation of the optical axis adjusting apparatus 5, whereby an optical axis is adjusted.

The optical axis adjusting apparatus 5 is provided with a case 50, a motor 51 and a speed reduction mechanism 52 which are received within the case 50, and an extendable/retractable rod 53 extending/retracting via the speed reduction mechanism 52 due to a driving operation of the motor 51 so as to tilt the reflector 4.

However, since the optical axis adjusting apparatus 5 in the conventional head light for the automobile mentioned above is structured such that the motor 51 is received within the case 50 in a substantially closed state, the case 50 is filled with heat of the motor 51, so that there is a problem concerning a heat radiating performance of the motor.

### SUMMARY OF THE INVENTION

The present invention has been achieved with such points in mind.

It therefore is an object of the present invention to provide an optical axis adjusting apparatus of a head light for an automobile in which a heat radiating performance of a motor can be improved, an assembling property can be improved and a compact size can be achieved.

In order to achieve the object mentioned above, the present invention is characterized in that a case is separable into two portions, and an opening portion to which a motor is inserted and an insertion hole to which an extendable/retractable rod is inserted so as to freely oscillate are provided in the same direction.

As a result, in an optical axis adjusting apparatus of a head light for an automobile in accordance with the present invention, since an outer portion and an inner portion of the case are communicated with each other by the opening portion and the insertion hole provided in the case, heat of the motor within the case is discharged to an external portion via the opening portion and the insertion hole, so that a heat radiating performance of the motor can be improved. Further, since shapes of the opening portion and the insertion hole substantially coincide with outer shapes of the motor and the extendable/retractable rod, the opening portion and the insertion hole serve as a guide at a time of assembling a first case, so that an assembling property can be improved. Further, since the motor is inserted into the opening portion, whereby it is possible to reduce a width in an extending/retracting direction of the extendable/retractable rod at a degree corresponding to a size between an outer surface of the case and the motor in comparison with the structure in which the motor is received within the case in a substantially sealed state, it is possible to achieve a compact size.

### BRIEF DESCRIPTION OF THE ACCOMPANYING DRAWINGS

Fig. 1 is a vertical sectional view showing a first embodiment of an optical axis adjusting apparatus in a head light for an automobile in accordance with the present invention in a state of being mounted to a lamp housing;
Fig. 2 is a vertical sectional view of the other case;
Fig. 3 is a vertical sectional view of a state in which a motor, a speed reduction mechanism and an extendable/retractable rod are assembled in the other case;
Fig. 4 is a vertical sectional view of a state that a first case is assembled in the other case in which the motor, the speed reduction mechanism and the extendable/retractable rod are assembled;
Fig. 5 is a schematic view as seen along an arrow V in Fig. 3;
Fig. 6 is a schematic view as seen along an arrow VI in Fig. 4;
Fig. 7 is a schematic view as seen along an arrow VII in Fig. 4;
Fig. 8 is a vertical sectional view showing a second embodiment of an optical axis adjusting apparatus in a head light for an automobile in accordance with the present invention and showing the first case which is integrally formed with a lamp housing;
Fig. 9 is a vertical sectional view of the other case;
Fig. 10 is a vertical sectional view of a state in which a motor, a speed reduction mechanism and an extendable/retractable rod are assembled in the other case;
Fig. 11 is a vertical sectional view of a state that the first case is assembled in the other case in which the motor, the speed reduction mechanism and the extendable/retractable rod are assembled;
Fig. 12 is a partly vertical sectional view showing an optical axis adjusting apparatus in a head light for an automobile in accordance with the conventional art;
Fig. 13 is a sectional view taken along a line XIII-XIII in Fig. 12; and
Fig. 14 is a sectional view taken along a line XIV-XIV in Fig. 12.

### DETAILED DESCRIPTION OF THE PREFERRED EMBODIMENTS

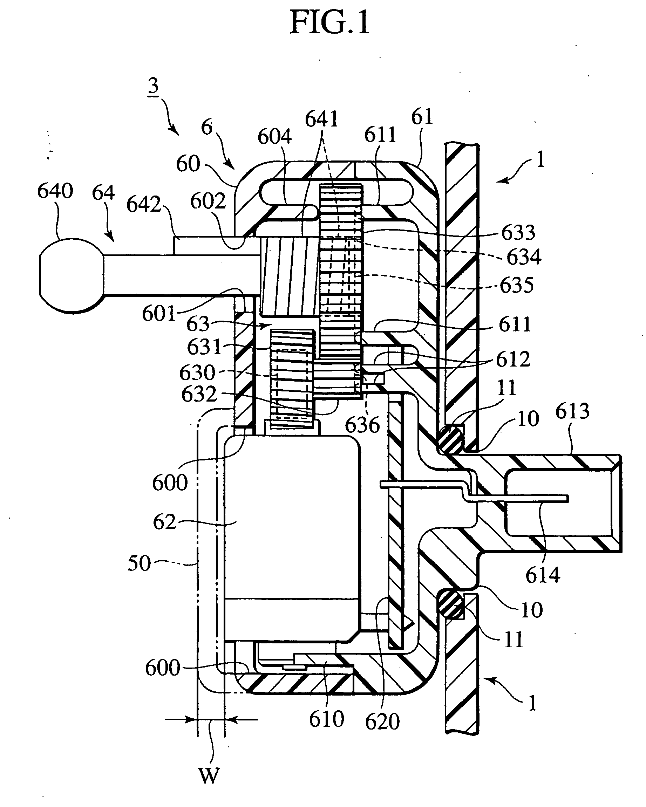

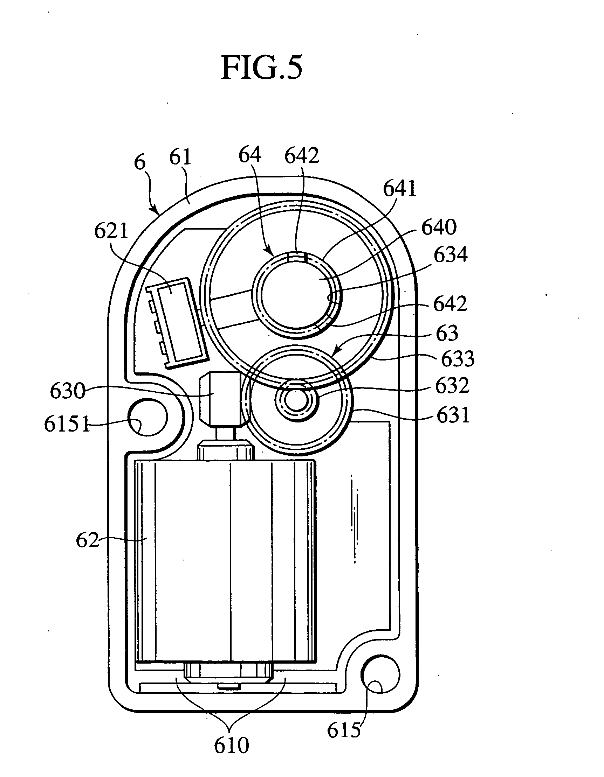

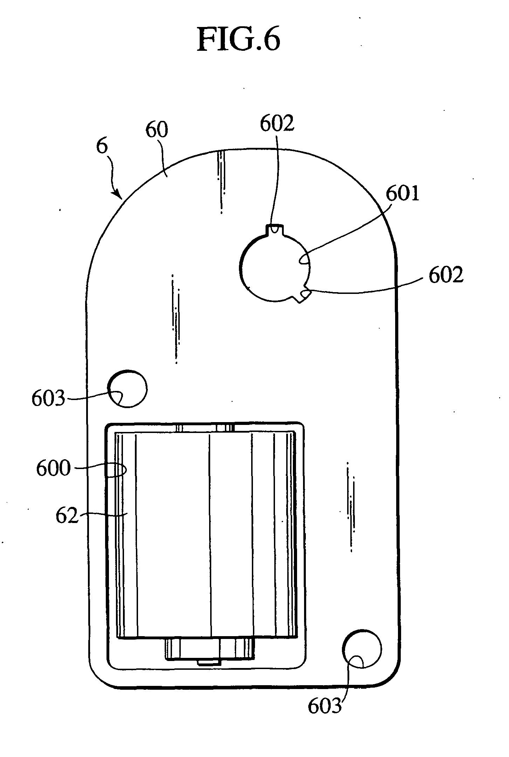

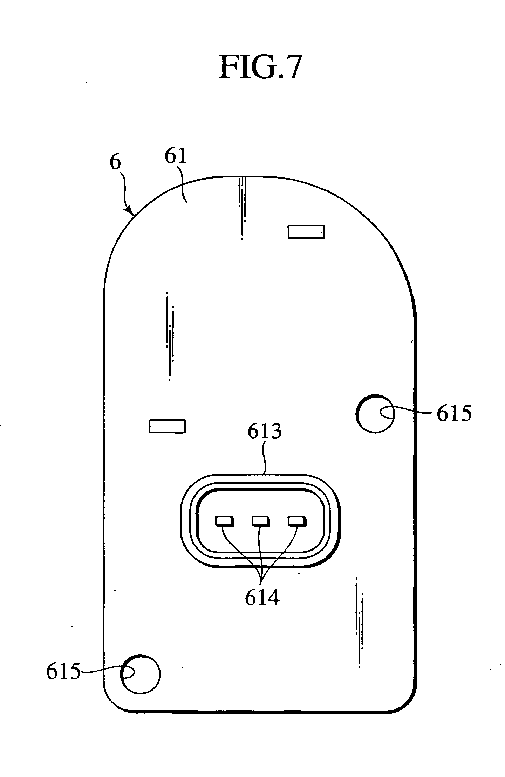

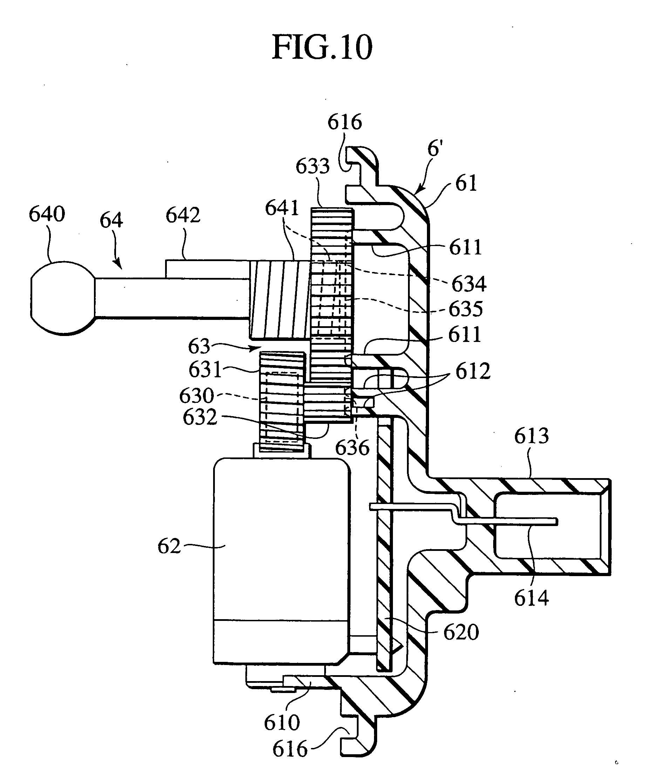

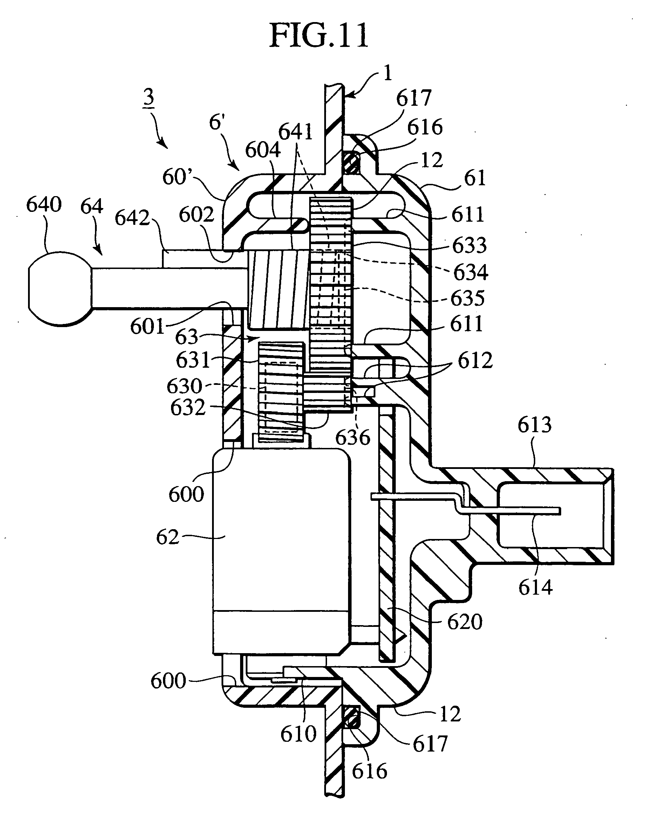

A description will be given of two embodiments of an optical axis adjusting apparatus in a head light for an automobile in accordance with the present invention with reference to Figs. 1 to 11.

Figs. 1 to 7 show a first embodiment of the optical axis adjusting apparatus in the head light for the automobile in accordance with the present invention. In the drawings, the same reference numerals denote the same elements as those in Figs. 12 to 14.

In the drawings, reference numeral 6 denotes an optical axis adjusting apparatus in accordance with the present invention. The optical axis adjusting apparatus 6 is constituted by two separable cases 60 and 61, a motor 62, a speed reduction mechanism 63 and an extendable/retractable rod 64.

A first case 60 of two separable cases is, for example, made of resin as shown in Figs. 1, 4 and 6, and is formed in a shape in which a front portion is closed and a rear portion is opened. The motor 62 is provided with a rectangular opening portion 600 to which the motor 62 is inserted and which substantially coincides with an outer shape of the motor 62, and a circular insertion hole 601 to which the extendable/retractable rod 64 is inserted so as to freely oscillate and which substantially coincides with an outer shape of the extendable/retractable rod 64. These opening portion 600 and the insertion hole 601 are provided in the same direction, that is, in an extending/retracting direction of the extendable/retractable rod 64. In this case, two recess portions 602 for preventing the extendable/retractable rod 64 from rotating are provided in the insertion hole 601. Further, two circular through holes 603 are respectively provided in this first case 60. Further, a holder portion 604 for holding the speed reduction mechanism 63 is integrally protruded rearward in this first case 60.

The other case 61 among the two separable cases is, for example, made of resin as shown in Figs. 1 to 5 and 7, and is formed in a shape in which a front portion is opened and a rear portion is closed. A motor holder portion for holding the motor 62 and speed reduction mechanism holder portions 611 and 612 for holding the speed reduction mechanism 63 are respectively protruded forward in the other case 61 in an integral manner. The speed reduction mechanism holder portion is constituted by a first speed reduction mechanism holder portion 611 having a large diameter and formed in a cylindrical shape, and a second speed reduction mechanism holder portion 611 having a small diameter and formed in a cylindrical shape. Further, a connector portion 613 is integrally protruded rearward in the other case 61. Three terminals 614 are provided in this connector portion 613 in accordance with an insert molding. Further, two circular through holes 615 are respectively provided in the other case 61 in correspondence to the through hole 603 in the first case 60.

An electric circuit board 620 is mounted to the motor 62 and is electrically connected thereto. The electric circuit board 620 is constituted by a printed circuit board (PCB) or the like on which a control circuit and the like are printed and wired. A position sensor 621 such as a potentiometer or the like is mounted on the electric circuit board 620. A rotation of the motor 62 is detected by the position sensor 621, and the rotation of the motor 62 is controlled by the control circuit.

The speed reduction mechanism 63 is, as shown in Figs. 1 and 3 to 5, constituted by a worm 630 fixed to a rotary shaft of the motor 62, a worm wheel 631 engaged with the worm 630, an idle gear 632 integrally formed with the worm wheel 631, and an output gear 633 engaged with the idle gear 632. A female feeding screw portion 634 is provided in a center of the output gear 633. Further, circular recess portions 635 and 636 are provided in one surface sides of the output gear 633 and the idle gear 632.

The extendable/retractable rod 64 is, as shown in Figs. 1 and 3 to 5, constituted by a spherical portion 640 disposed at one end portion, a male feeding screw portion 641 at another end portion, and two convex portions 642 for preventing another end portion from rotating. The male feeding screw portion 641 is screwed into the female feeding screw portion 634 of the output gear 633.

Next, a description will be given of a process of assembling the optical axis adjusting apparatus 6 in accordance with the present invention structured in the manner mentioned above.

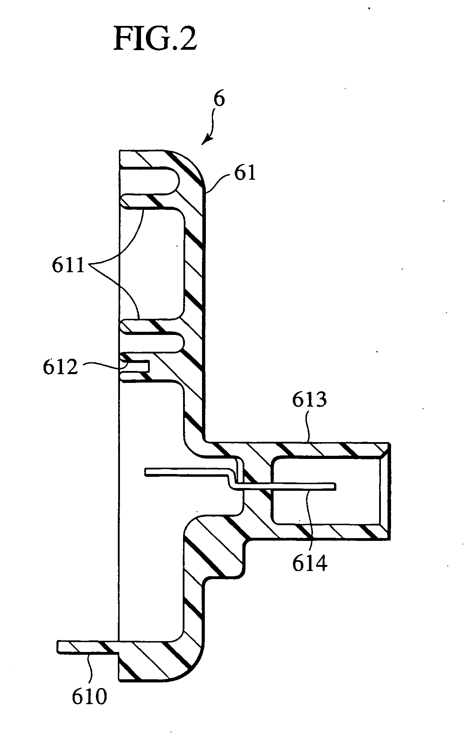

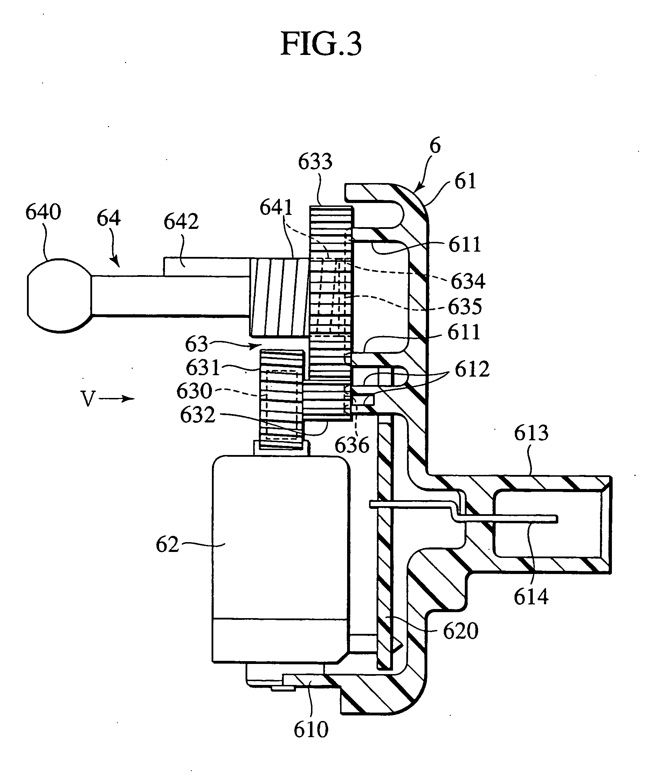

At first, the electric circuit board 620, the motor 62, the speed reduction mechanism 63 and the extendable/retractable rod 64 are assembled in the other case 61 shown in Fig. 2 (refer to Fig. 3). That is, the electric circuit board 620 is fixed to the other case 61. The motor 62 is held by the motor holder portion 610. The cylindrical first speed reduction mechanism holder portion 611 and second speed reduction mechanism holder 612 are set to the circular recess portions 635 and 636 in one surface sides of the output gear 633 and the idle gear 632, whereby the output gear 633 and the idle gear 632 are rotatably held in the first speed reduction mechanism holder portion 611 and the second speed reduction mechanism holder 612.

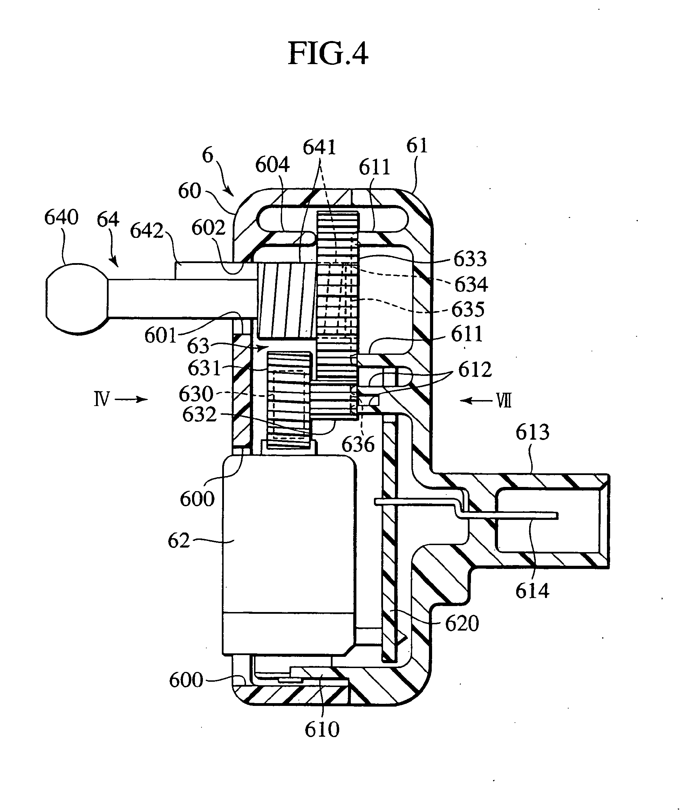

Then, the first case 60 is assembled in the other case 61 in which the electric circuit board 620, the motor 62, the speed reduction mechanism 63 and the extendable/retractable rod 64 are assembled (refer to Fig. 4). That is, the motor 62 is inserted into the opening portion 600, the extendable/retractable rod 64 is inserted to the insertion hole 601 so as to freely oscillate, the rotation preventing convex portion 642 is fitted to the rotation preventing recess portion 602 so as to freely oscillate, and the output gear 633 is rotatably held by the holder portion 604 together with the first speed reduction mechanism holder portion 611. In the manner mentioned above, the optical axis adjusting apparatus 6 in accordance with the present invention can be assembled.

Then, the optical axis adjusting apparatus 6 in accordance with the present invention is mounted to the lamp housing 1, and the spherical portion 640 of the extendable/retractable rod 64 is fitted to a spherical recess portion (not shown) of the reflector 4 (refer to Fig. 1). That is, the optical axis adjusting apparatus 6 in accordance with the present invention is arranged inside the lamp chamber 3, the connector portion 613 is inserted to a window portion 10 provided in the lamp housing 1, an O-ring 11 is interposed between the lamp housing 1 and the case 61, a screw (not shown) is inserted into the circular through holes 603 and 615, and the optical axis adjusting apparatus 6 is mounted to the lamp housing 1 by means of the screw. As a result, the optical axis adjusting apparatus 6 in accordance with the present invention is arranged between the lamp housing 1 and the reflector 4.

Since the optical axis adjusting apparatus 6 in accordance with the present invention in this embodiment is structured in a manner mentioned below, a heat radiating performance of the motor 62 can be improved, an assembling property can be improved and a compact size can be achieved.

That is, since the optical axis adjusting apparatus 6 in accordance with the present invention in this embodiment is structured such that an outer portion and an inner portion of the cases 60 and 61 are communicated with each other by the opening portion 600 and the insertion hole 601 which are provided in the first case 60, heat of the motor 62 within the cases 60 and 61 is radiated outward via the opening portion 600 and the insertion hole 601, so that a heat radiating performance of the motor 62 can be improved.

Further, since the optical axis adjusting apparatus 6 in accordance with the present invention in this embodiment is structured such that the shapes of the opening portion 600 and the insertion hole 601 substantially coincide with the outer shapes of the motor 62 and the extendable/retractable rod 64, the opening portion 600 and the insertion hole 601 serve as a guide at a time of assembling the first case 60 in the other case 61 in which the electric circuit board 620, the motor 62, the speed reduction mechanism 63 and the extendable/retractable rod 64 are assembled, so that an assembling property can be improved.

Further, since the optical axis adjusting apparatus 6 in accordance with the present invention in this embodiment is, as shown in Fig. 1, structured such that the motor 62 is inserted to the opening portion 600, whereby it is possible to reduce a width in an extending/retracting direction of the extendable/retractable rod 64 at a degree of a size W between the outer surface of the case 50 and the motor 62 in comparison with the structure in which the motor 62 is received within the case 50 (shown by a double-dotted chain line in Fig. 1) in a substantially sealed state, so that a compact size can be achieved.

In particular, since the optical axis adjusting apparatus 6 in this embodiment is structured such that the case is constituted by two separable cases, and the other case 62 within which the electric circuit board 620, the motor 62, the speed reduction mechanism 63 and the extendable/retractable rod 64 are assembled is assembled in the first case 60, an assembling property can be further improved.

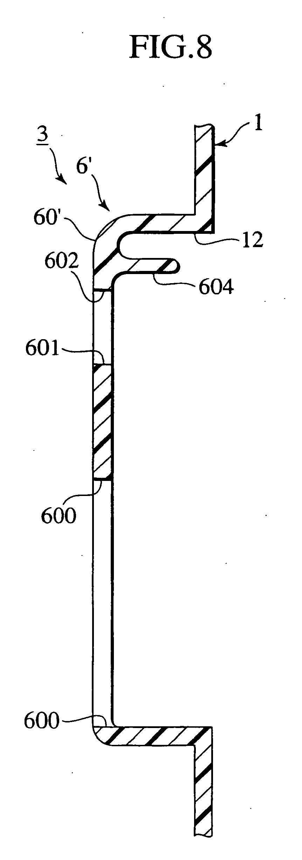

Figs. 8 to 11 show a second embodiment of an optical axis adjusting apparatus in a head lamp for an automobile in accordance with the present invention. In the drawings, the same reference numerals as those of Figs. 1 to 7 and Figs. 12 to 14 denote the same elements.

An optical axis adjusting apparatus 6' in accordance with the present invention in this embodiment is, as shown in Figs. 8 to 11, such that the first case 60' is constituted by a part of the housing 1. That is, a recess portion 12 for the case is provided in a part of the lamp housing 1, and the opening portion 600, the insertion hole 601, the rotation preventing recess portion 602 and the holder portion 604 are provided in the recess portion 12.

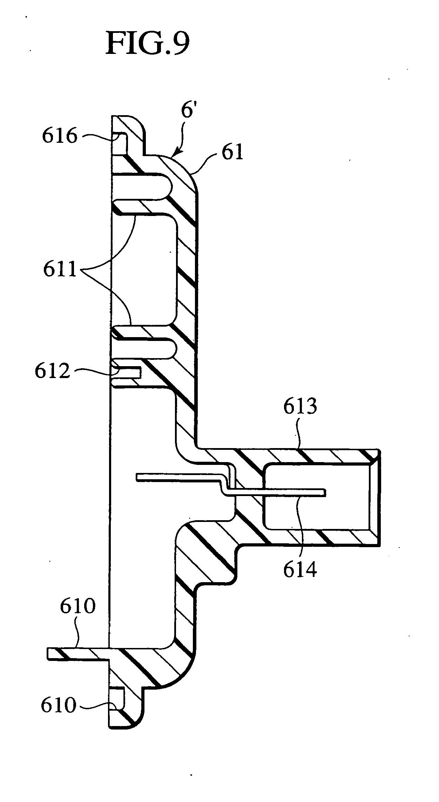

On the contrary, as shown in Figs. 9 to 11, a seal recess portion 616 is provided in an opening end portion of the other case 61. The optical axis adjusting apparatus 6' is constructed by assembling the other case 61 in the first case 60' integrally formed with the lamp housing 1 with interposing an O-ring 617.

The structure in accordance with the second embodiment can achieve the same operations and effects as those of the first embodiment mentioned above.

In particular, since the second embodiment is structured such that the first case 60' is constituted by a part of the lamp housing 1, the number of parts can be reduced.

Further, in the second embodiment, since the other case 61 protrudes outside the lamp housing 1 and the first case 60' protrudes inside the lamp housing 1, a protruding size to the inside from the lamp housing 1 is reduced in comparison with the structure in which a whole of the optical axis adjusting apparatus is arranged inside the lamp housing 1. As a result, it is possible to reduce a depth of the head light for the automobile.

In this case, in the second embodiment, the first case 60' is integrally formed with the lamp housing 1, however, in accordance with the present invention, the other case 60 may be integrally formed with the lamp housing 1 in a reverse manner.

Further, in the first and second embodiments mentioned above, the structure is made such that the motor 62, the speed reduction mechanism 63 and the extendable/retractable rod 64 are assembled within the other case 61 and thereafter the other case 61 is assembled in the first case 60 or 60', however, in accordance with the present invention, the structure may be made such that the motor 62, the speed reduction mechanism 63 and the extendable/retractable rod 64 are assembled within the first case 60 or 60' and thereafter the first case 60 or 60' is assembled in the other case 61.

As mentioned above, in the optical axis adjusting apparatus in the head light for the automobile in accordance with the present invention, since the outer portion and the inner portion of the case are communicated with each other by the opening portion and the insertion hole provided in the case, the heat of the motor within the case is discharged to the external portion via the opening portion and the insertion hole, so that a heat radiating performance of the motor can be improved. Further, since the shapes of the opening portion and the insertion hole substantially coincide with the outer shapes of the motor and the extendable/retractable rod, the opening portion and the insertion hole serve as the guide at a time of assembling the first case, so that an assembling property can be improved. Further, since the motor is inserted into the opening portion, whereby it is possible to reduce the width in the extending/retracting direction of the extendable/retractable rod at a degree corresponding to the size between the outer surface of the case and the motor in comparison with the structure in which the motor is received within the case in a substantially sealed state, it is possible to achieve a compact size.

Although the invention has been described above by reference to certain embodiments of the invention, the invention is not limited to the embodiments described above. Modifications and variations of the embodiments described above will occur to those skilled in the art, in light of the above teachings. The scope of the invention is defined with reference to the following claims.

## Claims

1. In a head light (L) for an automobile, where:
a lamp chamber (3) is defined by a lamp housing (1) and a lens (2); and
a light source bulb is arranged and a reflector (4) for reflecting a light beam output from said light source bulb to said lens (2) side is arranged so as to freely tilt within said lamp chamber (3),
an optical axis adjusting apparatus (6) is arranged between said lamp housing (1) and said reflector (4) wherein said reflector (4) is tilted in accordance with an operation of said optical axis adjusting apparatus (6), so that an optical axis is adjusted,
said optical axis adjusting apparatus (6) in a head light (L) for an automobile is **characterized in that**:
said optical axis adjusting apparatus (6) in a head light (L) for an automobile comprises two separable cases (60,61), a motor (62) and a speed reduction mechanism (63) which are received within said cases (60,61), and an extendable/retractable rod (64) extending/retracting via said speed reduction mechanism (63) by driving said motor (62) so as to tilt said reflector (4); and
**characterized in that** an opening portion (600) to which said motor (62) is inserted and an insertion hole (601) to which said extendable/retractable rod (64) is inserted so as to freely oscillate are provided in one case of said two separable cases (60,61) in the same direction.

2. An optical axis adjusting apparatus (6) in a head light (L) for an automobile according to claim 1, **characterized in that** said one case (60,61) or said other case (60,61) is constituted by said lamp housing (1).

3. An optical axis adjusting apparatus in a head light for an automobile according to claim 1 or 2, **characterized in that** said optical axis adjusting apparatus (6) is assembled in said one case (60,61) after assembling said motor (62), said speed reduction mechanism (63) and said extendable/retractable rod (64) within said other case of said two separable cases (60,61).

4. An optical axis adjusting apparatus (6) in a head light (L) for an automobile according to claim 1 or 2, **characterized in that** said optical axis adjusting apparatus (6) is assembled in said other case (60,61) after assembling said motor (62), said speed reduction mechanism (63) and said extendable/retractable rod (64) within said one case of said two separable cases (60,61).

## Patentansprüche

1. In einem Scheinwerfer (L) für ein Kraftfahrzeug, wo:
eine Lampenkammer (3) durch ein Lampengehäuse (1) und eine Linse (2) gebildet ist; und
eine Lichtquellenlampe angeordnet ist und ein Reflektor (4) zum Reflektieren eines Lichtstrahlaustritt von dem Lichtquellenkolben zu der Seite der Linse (2) angeordnet ist, um sich innerhalb der Lampenkammer (3) frei zu neigen,
eine optische Achsen- Einstellvorrichtung (6) ist zwischen dem Lampengehäuse (1) und dem Reflektor (4) angeordnet, wobei der Reflektor (4) in Übereinstimmung mit einem Betrieb der optischen Achsen- Einstellvorrichtung (6) geneigt ist, so dass eine optische Achse eingestellt wird, wobei
die optische Achsen- Einstellvorrichtung (6) in einem Scheinwerfer (L) für ein Kraftfahrzeug **dadurch gekennzeichnet ist, dass**:
die optische Achsen- Einstellvorrichtung (6) in einem Scheinwerfer (L) für ein Kraftfahrzeug aufweist zwei separate Gehäuse (60, 61), einen Motor (62) und eine Drehzahlreduzierungsvorrichtung (63), die innerhalb der Gehäuse (60, 61) aufgenommen sind, und eine vorschiebbare / rückziehbare Stange (64), die sich über die Drehzahlreduzierungsvorrichtung (63) durch Antreiben des Motors (62) vorschiebt / zurückzieht, um den Reflektor (4) zu neigen; und
**dadurch gekennzeichnet, dass** ein Öffnungsabschnitt (600), in den der Motor (62) eingesetzt ist und eine Einsetzöffnung (601), in die die vorschiebbare / rückziehbare Stange (64) eingesetzt ist, um frei zu oszillieren, in einem Gehäuse der zwei separaten Gehäuse (60, 61) in derselben Richtung vorgesehen sind.

2. Optische Achsen- Einstellvorrichtung (6) in einem Scheinwerfer (L) für ein Kraftfahrzeug nach Anspruch 1, **dadurch gekennzeichnet, dass** das Gehäuse (60, 61) oder das andere Gehäuse (60, 61) durch das Lampengehäuse (1) gebildet werden.

3. Optische Achsen- Einstellvorrichtung (6) in einem Scheinwerfer (L) für ein Kraftfahrzeug nach Anspruch 1 oder 2, **dadurch gekennzeichnet, dass** ein die optische Achsen- Einstellvorrichtung (6) in dem einen Gehäuse (60, 61) nach dem Zusammenbauen des Motors (62), der Drehzahlreduzierungsvorrichtung (63) und der vorschiebbaren / rückziehbaren Stange (64) innerhalb des anderen Gehäuses der zwei separaten Gehäuse (60, 61) zusammengebaut wird.

4. Optische Achsen- Einstellvorrichtung (6) in einem Scheinwerfer (L) für ein Kraftfahrzeug nach Anspruch 1 oder 2, **dadurch gekennzeichnet, dass** die optische Achsen- Einstellvorrichtung (6) in dem anderen Gehäuse (60, 61) nach dem Zusammenbauen des Motors (62), der Drehzahlreduzierungsvorrichtung (63) und der vorschiebbaren / rückziehbaren Stange (64) innerhalb des einen Gehäuses der zwei trennbaren Gehäuse (60, 61) zusammengebaut wird.

## Revendications

1. Phare de véhicule (L) pour une automobile, dans lequel :
une chambre à lampe (3) est définie par un boîtier à lampe (1) et une lentille (2) ; et
une ampoule formant source de lumière est agencée, et un réflecteur (4), devant réfléchir un faisceau de lumière produit par ladite ampoule formant source de lumière vers le côté de ladite lentille (2), est agencé de manière à s'incliner librement à l'intérieur de ladite chambre à lampe (3),
un dispositif de réglage d'axe optique (6) est disposé entre ledit boîtier à lampe (1) et ledit réflecteur (4), dans lequel ledit réflecteur (4) est incliné selon un actionnement dudit dispositif de réglage d'axe optique (6), de manière qu'un axe optique soit ajusté,
ledit dispositif de réglage d'axe optique (6), dans un phare (L) pour une automobile, est
**caractérisé en ce que** :
ledit dispositif de réglage d'axe optique (6) dans un phare (L) pour une automobile comprend deux boîtiers (60, 61) séparés, un moteur (62) et un mécanisme de réduction de vitesse (63) logé dans lesdits boîtiers (60, 61), et une tige déployable/rétractable (64) s'étendant/se rétractant via ledit mécanisme de réduction de vitesse (63) par commande dudit moteur (62), pour incliner ledit réflecteur (4) ; et
**caractérisé en ce qu'**une partie d'ouverture (600), sur laquelle est inséré ledit moteur (62), et un trou d'insertion (601), sur lequel est insérée ladite tige déployable/rétractable (64) pour osciller librement, sont prévus, dans un boîtier parmi lesdits deux boîtiers (60, 61) séparés, dans la même direction.

2. Dispositif de réglage de l'axe optique (6) pour un phare (L) pour une automobile selon la revendication 1, **caractérisé en ce que** ledit premier boîtier (60, 61) ou ledit autre boîtier (60, 61) est composé dudit boîtier à lampe (1).

3. Dispositif de réglage de l'axe optique (6) pour un phare (L) pour une automobile selon la revendication 1 ou 2, **caractérisé en ce que** ledit dispositif de réglage d'axe optique (6) est assemblé, dans ledit premier boîtier (60, 61) après l'assemblage dudit moteur (62), dudit mécanisme de réduction de vitesse (63) et ladite tige déployable/rétractable (64), dans ledit autre boîtier desdits deux boîtiers (60, 61) séparés.

4. Dispositif de réglage de l'axe optique (6) pour un phare (L) pour une automobile selon la revendication 1 ou 2, **caractérisé en ce que** ledit dispositif de réglage d'axe optique (6) est assemblé dans ledit autre boîtier (60, 61) après assemblage dudit moteur (62), dudit mécanisme de réduction de vitesse (63) et de ladite tige déployable/rétractable (64), dans ledit premier boîtier parmi lesdits deux boîtiers (60, 61) séparables.
